# EUROPEAN PATENT APPLICATION

(11) **EP 3 734 221 A1**
(43) Date of publication of application: **04.11.2020**
(21) Application number: 18895587.6
(22) Date of filing: 25.12.2018
(51) Int. Cl.: G01C 15/00

(54) **THREE-DIMENSIONAL LASER LIGHT SCANNING DEVICE**

(30) Priority: 26.12.2017 JP 2017248602; 21.12.2018 JP 2018239281
(71) Applicant: Kumonos Corporation, Minoo-shi, Osaka 562-0035 (JP)
(72) Inventor: SUGIHARA, Hiroaki, Ueda-shi, Nagano 386-0498 (JP)
(74) Representative: Prinz & Partner mbB
(86) International application number: PCT/JP2018/047612
(87) International publication number: WO 2019/131653

(57) **Abstract**

When a three-dimensional laser scanning device is used at a civil engineering construction site, a point cloud density of laser beam per unit area is greatly different between a nearby area of the device and a far end, which increases the number of measurement and the amount of time for measurement to satisfy the accuracy of distance measurement. In the three-dimensional laser scanning device, an axis around which a body rotates or rotatably moves is tilted to intersect with a direction perpendicular to a measurement surface. A control unit gradually reduces an angular velocity of the rotation or the rotatable movement of the body around the axis with an increase of a distance to the measurement point to keep the point cloud density of laser beam projected onto the measurement surface constant.

## Description

### TECHNICAL FIELD

The present invention relates to a three-dimensional laser scanning device.

### BACKGROUND ART

A laser distance measuring technique has been used in various fields. According to this technique, laser is projected on a measurement object, and a reflected laser from the object is received to measure a distance to the object. In particular, the measuring technique has been widely used in the field of factory automation (FA). Recently, various laser radar systems are used in the vehicle collision-avoidance safety systems. Then, an enhanced demand is expected for this technology.

An information and communication technology (ICT), or information-driven construction, has been widely employed in the construction industry. The ICT construction needs measurements for obtaining three-dimensional (3D) data of the construction sites before and after respective construction stages. This requires an increasing demand for the construction-oriented 3D laser-scanning devices. Also, the 3D laser-scanning devices have been used not only in the building and civil engineering works but also in various fields, such as factory or plant construction, cultural assets preservation survey, product test, reverse engineering, investigation and analysis of crime or accident sites, forest investigation, agriculture, and virtual reality.

Discussions will be made to the conventional 3D laser scanning devices. Some of the conventional 3D laser scanning devices have an optical unit and a scanning unit. The optical unit has a laser source configured to emit laser beam toward a measurement object in the surrounding environment and a beam receiver configured to receive return beam reflected from the object. In order to scan the laser beam across the object, the laser unit has a vertical rotating mechanism for rotating a mirror about a horizontal axis and a horizontal rotating mechanism for rotating the mirror about a vertical axis. For this purpose, the vertical mirror rotating mechanism includes the mirror and a mechanism configured to rotate the mirror about the horizontal axis and thereby change a path of laser beam. The horizontal rotating mechanism is to rotate the mirror rotating mechanism and the optical unit about the vertical axis to scan the laser beam horizontally in the surrounding environment. The optical unit further includes a controller. The controller calculates a distance to laser-projected point by using a time difference from the emission to the reception of the laser beam and/or a phase difference between the emitted and received laser beams. Then, the controller obtains three-dimensional coordinates of respective object points, by using the calculated distances to the respective object points, and the vertical and horizontal rotation angles of the vertical and horizontal rotating mechanisms. The controller has a calculation unit for obtaining the three-dimensional coordinates and a control unit for controlling the rotations of various devices such as laser source, light receiver, and mirror. The controller further has a functional unit for outputting the calculated three-dimensional coordinates to external devices.

### PRIOR ART DOCUMENTS

### PATENT DOCUMENTS

Patent Document 1: JP 2009-531674 A
Patent Document 2: JP 2015-535337 A

### SUMMARY OF THE INVENTION

### PROBLEMS TO BE SOLVED BY THE INVENTION

### (Presence of unscannable area)

When used in a civil engineering construction site, a conventional three-dimensional laser scanning device, which may be referred to as a conventional device, is used with a supporting structure, such as a tripod. In this case, the conventional device cannot scan the nearby area immediately below the set position because the conventional device is configured to rotate the mirror that is provided at an angle of 45 degrees with respect to a horizontal plane around a horizontal axis while rotating the body around an axis perpendicular to the horizontal plane. This unmeasurable area is referred to as an "unscannable area".

For example, in the case where a finished work which is a completed part of road pavement is to be checked, a survey with a conventional device requires its tripod to be set on a roadside in view of the unscannable area. In addition, in the case where a survey is performed on a road, the survey needs to be performed in view of the unscannable area of the nearby area immediately below the set position by overlapping measurement areas to eliminate the unscannable area.

This increases the number of times of measurement and also increases the amount of time required for measurement. In addition, the measurement areas overlap in many portions, which increases the time required for subsequent processing.

### (Density variation of point cloud data)

Similarly, in the case where a conventional device is used in a civil engineering construction site, the density of point cloud data obtained by performing distance measurement for a fixed period of time varies depending on the areas to be measured, because the conventional device projects laser beam to the surrounding environment by rotating the body around a vertical axis while rotating the mirror around a horizontal axis at a constant high speed. For example, in checking the finished work of road pavement, the density of the point cloud data is high in an area near the set position of the conventional device, but the density of the point cloud data decreases as the distance increases.

This is because the intervals between the laser beam irradiation on the road surface are widened greatly in the area with a long distance of the laser beam for laser distance measurement reflected by the mirror, as compared with the area with a short distance of the laser beam, although an angular difference in the rotation of the mirror caused after a fixed period of time is the same since the mirror rotates at a constant speed. In other words, the inclination of tan θ between the conventional device and the road, which is a measurement surface, differs greatly depending on θ.

On the other hand, the required number of point cloud data per unit area is defined by a criterion for checking the finished work of the road, and an accuracy higher than this level is necessary. When the point cloud data in the farthest measurable area are collected until the density thereof becomes a prescribed value or more to meet the required accuracy, the density of the point cloud data becomes too high in the nearby area of the conventional device, which causes an imbalance in which the point cloud data are collected more than necessary.

As described above, measuring an area far from the device so as to satisfy the required accuracy causes an unnecessary increase in the number of times of measurement, which increases the time for checking the finished work. In addition, measurement is excessively performed in the nearby area of the conventional device, and an excessive amount of point cloud data is collected and stored, which results in the need for a storage device to store the excessive amount of data and also the need for an excessively large hardware for data processing. This increases the costs for the devices, and prevents real-time data processing due to too much data to be processed.

### (Problem of low reflectance)

In addition, in the case where a conventional device is used at a civil engineering construction site, measurement of a specific surface is often required. For example, measurement of a road, a slope, a retaining wall, and a revetment is required.

When a measurement surface is a surface of a road or the like, the angle at which laser beam is incident on the measurement point decreases since the reflection angle decreases as the distance from the device increases, which decreases the reflection of laser beam. In inspection of the finished work of road pavement, an asphalt surface is irradiated with laser beam, but the amount of reflected return beam is small since a surface, such as asphalt, has a small reflection coefficient.

As described above, a decrease in the amount of return beam reflected from a point distant from the three-dimensional laser scanning device leads to a decrease in the measurement accuracy. As a result, measurement accuracy does not satisfy a required level even if the density of point cloud data satisfies the criterion, which narrows the measurement range. When the measurement range is narrowed, the number of times of measurement needs to be increased, and the amount of time required for measurement also increases.

### (Problem of excessive data volume)

A conventional device collects a large amount of point cloud data of the nearby area in an attempt to satisfy the required level of the density of point cloud data. This makes it difficult to check the finished work on site by comparing it with design drawings using collected point cloud data. For example, in the case where a measurement surface is a road, the point cloud data include unnecessary data measured by irradiating objects other than the road, and thus the point cloud data need to be processed in subsequent processing after a series of measurement operation is completed. This increases the time for data processing, and thus the conventional device is not suitable for a finished-work inspection which is preferably performed in real time on site by comparing the finished work with design drawings. In addition, it is necessary to store a large amount of point cloud data for a series of measurement operation, which necessitates a large-capacity storage device to store the large amount of point cloud data. Further, it is also necessary to provide a high-speed device for information processing, such as generating an image on the basis of three-dimensional coordinate values from the point cloud data, which increases the hardware costs.

To solve the above problems, an object of the present invention is to provide a three-dimensional laser scanning device capable of reducing variation in the density of point cloud data without a drastic change from the mechanisms of a conventional three-dimensional laser scanning device. Another object of the present invention is to provide a three-dimensional laser scanning device capable of reducing the time for measuring the measurement surface and improving the measurement efficiency.

### MEANS FOR SOLVING THE PROBLEMS

To solve the above problems, a three-dimensional laser scanning device according to one aspect of the present invention is configured to obtain three-dimensional coordinates of measurement points by projecting laser beam to a surrounding environment and receiving return beam reflected from the surrounding environment, the three-dimensional laser scanning device, comprising:
an optical unit including a laser beam source configured to emit laser beam and a beam receiving device configured to receive return beam of the laser beam reflected from the measurement point;
a mirror driving unit including a mirror that deflects an optical path of the laser beam emitted from the laser beam source and also deflects an optical path of the return beam, and a rotation mechanism configured to rotate the mirror around a first axis;
a body driving unit configured to rotate or rotatably move the optical unit and the mirror driving unit around a second axis orthogonal to the first axis; and
a control unit configured to calculate and store three-dimensional coordinate values of the measurement point based on a distance to the measurement point obtained from by comparing the laser beam emitted from the laser beam source and the return beam reflected from the measurement point and rotation angles about the axis and the second axis, and also configured to control rotation of the mirror driving unit and rotation or rotatable movement of the body driving unit,
wherein the measurement point is on a flat measurement surface, and
wherein a direction of the second axis intersects with a direction orthogonal to the measurement surface at a predetermined angle.

It is preferable that the control unit gradually reduces an angular velocity of rotation or rotatable movement about the second axis with an increase of the distance to the measurement point, and the control unit gradually reduces an angular velocity of rotation about the first axis in accordance with a change in the angular velocity of the second rotation or rotatable movement as the increase of the distance to the measurement point.

It is also preferable that the control unit controls the angular velocity of rotation or rotatable movement about the second axis or the first axis so as to satisfy a set criterion of a measurement-point density, based on a result of measurement of the measurement surface performed in advance at a density lower than normal.

In the three-dimensional laser scanning device according to another aspect of the present invention, the control unit increases a projection time of the laser beam or intensity of the laser beam to each measurement point with the increase of the distance to the measurement point.

The control unit according to the present invention performs scanning at a density lower than normal in advance to obtain information on a range about the second shaft and information on a range about the first axis.

### EFFECTS OF THE INVENTION

The present invention achieves a reduction in variations in the density of point cloud data on the measurement surface and a reduction in the measurement time using a mass-producible device, thereby enhancing the measurement efficiency.

### BRIEF DESCRIPTION OF THE DRAWINGS

Fig. 1 is a diagram showing a configuration of a three-dimensional laser scanning device;
Fig. 2 is a top plan view showing a distribution of point clouds obtained by a conventional three-dimensional laser scanning device;
Fig. 3 is a diagram showing an embodiment in which a three-dimensional laser scanning device according to a first embodiment of the invention is set on a roadside;
Fig. 4 is a diagram showing an example of distribution of point clouds on a road, according to the first embodiment of the invention;
Fig. 5 is a diagram showing a control of a body rotation axis according to a second embodiment;
Fig. 6 is a diagram showing effects according to a second embodiment;
Fig. 7 is a diagram illustrating control of a mirror rotation axis according to a third embodiment; and
Fig. 8 is a diagram illustrating a difference in laser-beam reflectance between a near end and a far end.

### EMBODIMENTS OF THE INVENTION

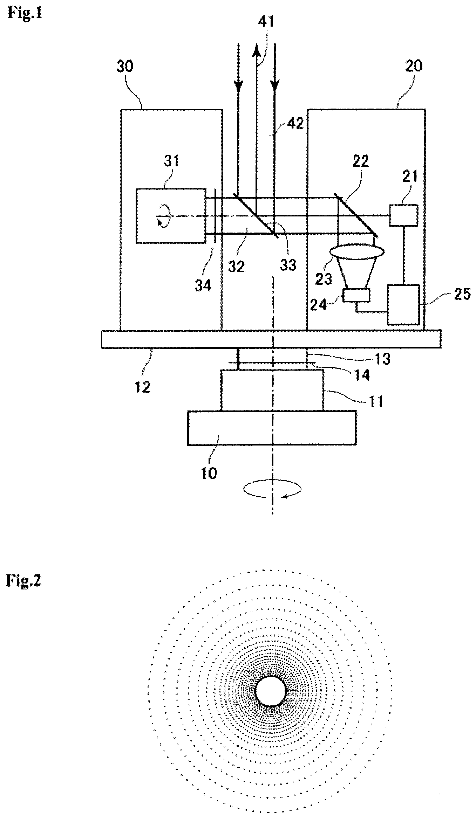

With reference to the accompanying drawings, embodiments of the present invention will be described below. Fig. 1 is a diagram showing a mechanical construction of a three-dimensional laser scanning device according to an embodiment of the present invention. The three-dimensional laser scanning device has a mechanical construction which is similar to that of conventional three-dimensional laser scanning devices, but it is different from the conventional device in controlling a rotation about a body axis and a rotation of mirror.

First, the configuration of the device and its operation will be described. The three-dimensional laser scanning device according to the embodiment is configured to project laser beam across a measurement object in the surround environment, receive return beam reflected from the measurement object, and detect a distance and angle information of each laser-projected point of the object, relative to the device, to obtain three-dimensional coordinates of the point.

The three-dimensional laser scanning device has an optical unit 20, a mirror rotating mechanism 30, and a body rotating mechanism. The optical unit 20 has a laser source for emitting a laser beam and a light receiver for receiving the laser beam reflected and returned from a surrounding environment. The mirror rotating mechanism 30 has a motor. The motor has a driving shaft which is oriented in a horizontal direction. The mirror rotating mechanism 30 also has a mirror mounted on the driving shaft with a reflecting surface of the mirror inclined at 45 degrees relative to the shaft. This allows that the laser beam from the laser source is reflected by the mirror and rotated in a vertical plane with the rotation of the shaft. The body rotating mechanism has a body shaft extending in a direction perpendicular to the body shaft of mirror rotating mechanism. The body shaft supports the optical unit and the mirror rotating mechanism, so that the optical unit and the mirror rotating mechanism are integrally rotated about the body shaft. The laser scanning device further includes a control unit 2. The control unit 2 is configured to calculate a distances from the device to each of the respective object points by using a time from the emission of the laser beam to the reception of the laser beam reflected from the object point. Also, the control unit 2 obtains a three-dimensional coordinate of the object point by using the calculated distance and associated rotation angles of the mirror rotating shaft and the body rotating shaft. In addition, the control unit 25 controls the driving operations of the device.

With reference to Fig. 1, the construction and operation of the device will be described below. The body rotating mechanism for rotating the optical unit 20 and the mirror rotating mechanism 30 about the body rotation axis, includes a rotation unit 11. The rotation unit 11 is mounted on a base 10 and has a motor with a reduction gear. The rotation unit 11 is driving connected with a rotation shaft or spindle 1 supporting a substrate 12. The substrate supports the optical unit 20 and the mirror rotating mechanism 30, so that by the driving of the rotation unit 11 the optical unit 20 and the mirror rotating mechanism 30 rotates about the spindle 13. The base 10 is designed to be mounted on a tripod, so that the base 10 and the three-dimensional laser scanning device 1 mounted on the base 10 are integrally tilted at surveying.

The optical unit 20 includes a laser source 21 for emitting laser beam 41, and a laser receiver for receiving the laser beam reflected and returned from the object points. To this end, the laser receiver includes a mirror 22, a condense lens 23, and a laser receiving sensor 24 for receiving the reflected and returned beam.

The laser source 21 includes a laser diode capable of generating and emitting the laser beam 41 having a wavelength in the infrared band of, for example, about 980 nm. The laser beam 41 emitted from the laser source 21 passes a through hole defined at a center of the mirror 22. Subsequently, the laser beam 41 is reflected by the mirror 33 of the mirror-rotation mechanism 30 and then projected across the surrounding environment.

The laser beam 42 reflected and returned from the object points enters the mirror 22 in the optical unit 20, where it is reflected by the mirror 22. The laser beam is then enters condense lens 23 where the laser beam is condensed. The condensed laser beam then enters the sensor 22 of the laser receiver 24. The laser receiver 24 generates an electric signal corresponding to the laser beam 24. The signal is transmitted to the control unit 25.

The mirror-rotation mechanism 30, which is mounted at a position to oppose the optical unit 20, rotates the mirror 33 to deflect the optical path of the laser beam 41 from the laser beam source 21 toward the object points in the surrounding environment. The mirror 33 also receives the laser beam 42 reflected and returned from the object points and directs the reflected and returned laser beam 42 toward the laser beam receiver in the optical unit 20.

The mirror 33 is mounted on a distal end of a cylinder 32 and tilted at an angle of 45 degrees with respect to the central axis of the cylinder. The cylinder 32 is drivingly connected to a mirror drive motor 31, so that the cylinder 32 rotates by the driving of the mirror drive motor 31. When the scanning device is mounted on a horizontal plane so that the body rotates about a vertical axis, the rotational axis of the mirror is oriented horizontally so that the mirror rotates about the horizontal axis. An encoder 34 is mounted on the cylinder 32 to detect a rotation angle of the cylinder 32. The cylinder 32 rotates about the mirror rotation axis at a high speed of several thousand rpm, for example, 2,000 rpm or 6,000 rpm. This allows the mirror 33 on the distal end of the cylinder 32 to rotate at a high speed about the horizontal rotation axis, emitting the laser beam 41 from the laser source 21 along a vertical plane to scan the surrounding environment. In this instance, a part of the laser beam oriented in a downward minor sector region (unscannable region) is blocked by the components of the device and the laser beam is projected in the remaining region major sector region other than the unscannable minor sector region.

The encoder 34 detects the rotation angle of the cylinder 32 and transmits the detected angle to the control unit 25, allowing the control unit 25 to obtain vertical scan data.

The rotation unit 11 is mounted on the base 10 and has a motor with a reduction mechanism for rotating the mounting plate 12 supporting the optical unit 20 and the mirror rotation mechanism 30 about the rotation axis of the body. Unlike the mirror-rotation mechanism, the rotation unit 11 rotates the body at a lower rotation speed of several rpm, i.e., several tens of seconds to one minute for one complete revolution. If the body axis is oriented vertically, the body rotates about the vertical body axis. With the arrangement, the device rotates about the vertical axis as the mirror rotates about the horizontal axis, and the combined rotations about the vertical and horizontal axes allows a three-dimensional laser scanning during which the encoder 14 on the spindle 13 detects the rotation angle of the device about the rotational axis of the device.

The control unit 25, which has a calculation unit and a memory unit, calculate a distance to each of the object points by means of Time-Of-Flight (TOF) method or Phase Difference method, using information of the emitted laser beam from the laser source 21 and the return laser beam 42 reflected from the point. Also, using the rotation angle about the body rotation axis detected by the encoder 34 and the rotation angle about the mirror rotation axis detected by the encoder 14, and the distance obtained, a three-dimensional coordinate information is obtained for respective measurement points. The three dimensional coordinate information is memorized in the memory of the control unit 25. Also, the three-dimensional coordinate information of the object points may be transmitted to an external personal computer, for example, through an appropriate interface. The control unit 25 also performs a laser beam modulation in the laser source 21, and other driving and measuring controls of, such as, mirror drive motor 31.

Discussions will be made to a road survey with the three-dimensional laser scanning device. In this survey, the three-dimensional laser scanning device is mounted on a tripod. If the device is placed on the tripod with the body axis oriented vertically and the mirror axis oriented horizontally, there appears the unscannable region because the downward-oriented laser beam is blocked by the components of the device as shown in Fig. 2. Fig. 2 shows the object points where the laser beam is projected from the device mounted on the tripod with the body and mirror axes oriented in the vertical and horizontal directions, respectively, in which the central blank indicates a region where no laser beam is projected. Fig. 2 also shows that an interval between neighborhood points with respect to the radial direction increases with a sdistance from the center of the circular blank region.

Preferably, the device is positioned outside the road, so that the unscannable circular region does not extend in the road area to be surveyed. More preferably, the device is positioned, so that the unscannable circular region is in tangential contact with the edge of the road. Otherwise, at least a part of the coordinate data may not be used

### First Embodiment:

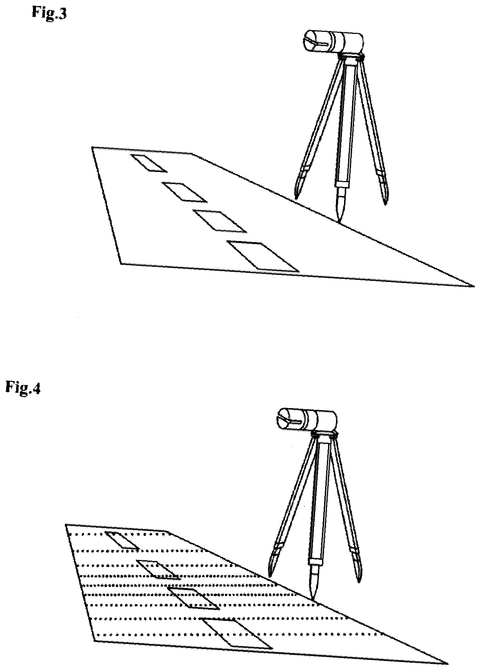

Fig. 3 shows a first embodiment of the present invention, in which the tripod is mounted beside but outside the road and the device on the tripod is tilted at an angle of 90 degrees, so that the body axis is oriented substantially in the road's transverse direction and in parallel to the road surface. This allows that, by emitting laser beam at a regular interval while rotating the mirror and the body of the device about respective axes, three-dimensional coordinate data of the laser-projected points on the road is obtained. As described above, the angular velocity of the mirror shaft is about 1,000 times greater than that of the body shaft. This causes that the trajectory of the laser-projected points draws a number of parallel lines running transversely across the road and spacing in the longitudinal direction of the road.

Fig. 4 schematically illustrates the trajectory lines of laser-projected points on the road, which is formed by the device positioned outside the road and tilted with the body axis oriented in parallel to the road surface. In this embodiment, because the body axis is tilted in parallel to the road surface and the laser beam is rotated about the body axis, the laser-projected points draw trajectory lines extending in parallel to the transverse direction of the road and thereby point cloud date of the laser-projected points is obtained.

As described above, when the body axis is oriented in the vertical direction, the device projects the laser beam concentrically around the device to generate concentric point of cloud data. In contrast, the device of which body axis is tilted in parallel to the road surface obtains point cloud data of the laser-projected point lines extending in parallel to the transverse direction of the road. In this instance, substantial every laser beam emitted from the device is projected to the road and thereby used for surveying, without being blocked by the components of the device. According to the conventional method in which the body axis is oriented in the vertical direction, a density of the laser-projected points in the longitudinal direction of the road becomes low in proportion to the distance from the device. In contrast, according to the invention, the density of the laser-projected points in the longitudinal direction can be increased than that obtained by the conventional method. This means that an area that the device of the invention can survey becomes larger than that of the conventional device. This in decreases the number of and, as a result, time for installations and setting of the device.

Typically, the survey area is not necessarily completely even, so that the tilting angle of the device does not need to be set precisely at an angle of 90 degrees. Also, the mirror axis does not need to be precisely in parallel to the road surface. For example, when surveying the tilted ground surface, the device may be tilted, so that the body axis is substantially in parallel to the tilted ground surface.

### Second Embodiment:

In a second embodiment, the device is tilted at an angle of 90 degrees to the road surface, and a rotation speed (i.e., angular velocity) around the body axis is decreased in proportion to a distance from the device with respect to the longitudinal direction of the road. This results in that an every surveyed region has substantially a constant density of point cloud. In contrast, according to the device in the first embodiment shown in Fig. 3, the density of the point cloud decreases with the distance from the device with respect to the longitudinal direction, although the laser beam is not blocked by the components of the device, so that no unscannable zone is generated.

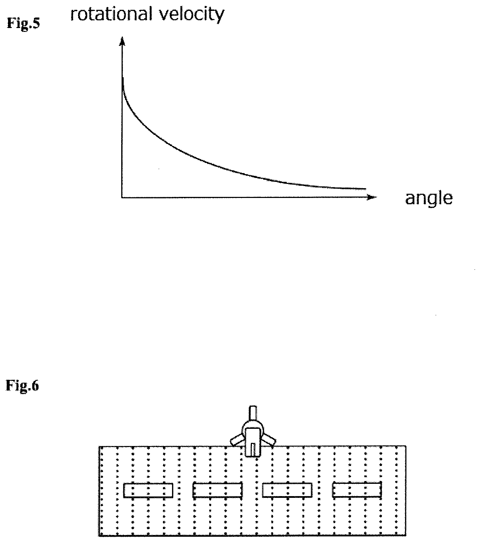

In the second embodiment, the angular velocity around the body rotation axis is variable, so that the angular velocity decreases with the increase of the distance from the device in the longitudinal direction. Fig. 5 is a diagram showing a relationship between the angular velocity around the body axis and the distance from the device, in which the angular velocity around the body axis decreases gradually with the increase of the distance from the device to the object point.

Fig. 6 schematically shows the distribution of the point cloud data obtained by the device according to the second embodiment. As shown in the drawing, intervals of the neighborhood lines of the laser-projected points, with respect to the longitudinal direction of the road (Y-direction) is set to be substantially constant by decreasing the angular velocity of the spindle in proportion to the distance from the device in that direction.

This control is achieved by controlling the angular velocity of the spindle which is detected by the encoder 14 mounted on the body shaft of the device. By using an output from the encoder 14, the angular velocity is controlled to decrease with the increase of the rotational angle of the spindle from the vertical direction (i.e., Z-direction perpendicular to the longitudinal and transverse directions (X- and Y-directions) of the road).

According to the embodiment described above, the spindle is rotated in the same direction; however, it may be rotated, like pendulum, in one direction and then in the opposite direction within a certain angular range. The angular range may be 180 degrees or less, but it is not restrictive and more than 180 degrees. As described above, the density of the points can be controlled constant by changing the angular velocity with the distance from the device to the laser projected points or the rotational angle of the spindle from the vertical direction.

### Third Embodiment:

This embodiment relates to provide a constant density with the point data in the X- direction and control of mirror rotation speed. According to the second embodiment, the density of point cloud data in the longitudinal direction of the road, i.e., Y-direction, is made constant by changing the angular velocity around the body axis. In this embodiment, the density of the point cloud data may decrease in the transverse direction, i.e., X-direction, with the distance from the device if the angular velocity of the mirror is kept constant.

Typically, the mirror is rotated at a velocity of several thousand rpm, such as 2,000-6,000 rpm, so that it is somewhat difficult to fine-control the rotational velocity of the mirror. In contrast, the body spindle is rotated at a velocity of several rpm, so that it is easy to control it. Also, the density of the point cloud data in the x-direction varies by changing the angular velocity of the body spindle with the distance in the Y-direction from the device.

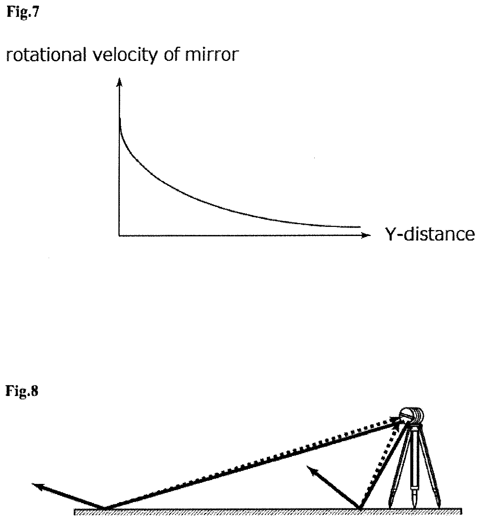

Therefore, in this embodiment, as shown in Fig. 7 the angular velocity of the mirror is decreased with the increase of the distance from the device in the Y-direction, so that the density of the point cloud date is substantially the same in every portion of the road with respect to the Y-direction. Of course, there may be a case where it is difficult to have completely the same density at one side close to the device and the other side away from the device. In this instance, a part of the point cloud data may be cancelled to provide each portion of the road with a constant density of cloud data.

### Fourth Embodiment:

The fourth embodiment intends to prevent deterioration of measurement accuracy due to decrease in a light intensity of laser spot in proportion to the distance from the device. Fig. 8 shows laser beams emitted from the three-dimensional laser scanning device. This illustrates that an angle between the laser beam and the ground surface differs in proportion to the distance from the device on the tripod to the laser spot on the ground surface, which results in that the light intensity of the laser beam reflected and returned from the spot decreases with the distance from the device to the spot, or the angle between the ground surface and the laser beam. The intensity of the reflected laser beam varies with a light absorption coefficient of the surface material. For example, an asphalt having a relatively lower absorption coefficient decreases the intensity of light reflected therefrom, which may lead to deterioration of the accuracy of distance measurement. Therefore, the accuracy of distance measurement for other points is deteriorated when the amount of laser beam emission is constant. Then, a constant laser intensity may result in a reduction of measurement accuracy with the increase of distance from the device.

According to the embodiment, a period of time for projecting laser beam onto each object point is extended to compensate for the deterioration of accuracy of distance measurement. The time extension for projecting laser beam onto each point can be done by projecting the laser beam a plurality of times onto the same point or by reducing a reference frequency for modulation of laser to be projected during the measurement. According to the former technique, the measurements are averaged to obtain the distance from the device to each point. Typically, a frequency of 1GHz is used for the reference frequency for laser modulation in order to obtain a number of point cloud data in a short period of time. Then, in the former technique, the plurality of laser beam projections are repeated onto each point at the reference frequency in order to increase the laser projection time to respective points. In the latter technique, an oscillator circuit with a frequency lower than the reference frequency is used. Alternatively, the frequency may be reduced by a frequency divider. The former and latter techniques may be combined to reduce the laser oscillation frequency less than the reference frequency and project the laser beam a plurality of times onto the same point.

According to the conventional three-dimensional laser scanning devices, a plurality of frequencies including the reference frequency are used to simultaneously conduct three measurements, including long distance and high accuracy measurement, meddle distance and medium accuracy measurement, and short distance and low accuracy measurement, and the measurements are averaged to determine a distance from the device. In this combined measurement method, three frequencies such as 1 GHz, 1,000 Hz, and 100 Hz are used. In this method, three oscillators may be provided for generating respective frequencies. Alternatively, two frequencies other than the reference frequency may be generated by using a frequency divider or a phase locked loop technology (PLL). When employing a phase difference technique, the laser projection time may be extended by sweeping the reference frequency. By using the sweeping technique, a variation of the reference frequency is taken into consideration in the comparison of the phases of the emitted and received laser beams 41 and 42 for the distance calculation, which increases the accuracy of the distance measurements.

Instead of extending the laser projection time onto each point, the light intensity of laser beam emitted from the laser source may be increased in proportion to the distance between the device and the projection point and thereby compensate for the reduction of light intensity of laser spot.

### Fifth Embodiment:

The fifth embodiment is to conduct a preliminary rough scan and thereby determine various scan parameters. Specifically, according to the embodiment, the preliminary rough scan is performed against the measurement object before the non-preliminary scan described above to determine various parameters for the subsequent non-preliminary scan. In the preliminary rough scan, information such as a minimum density of point cloud necessary for measurement and an allowable measurement accuracy are input in the device before it is set up at a position close to the measurement object, or road construction site. The operator drives the device to perform a first preliminary scan in which the measurement object is roughly scanned with a point density less than that in the subsequent non-preliminary scan. The device automatically recognizes a surface that matches with the conditions as the measurement object surface. Then, a second preliminary rough scan is performed to the recognized measurement object surface. In this operation, various parameters such as rotation angles and angle velocity of the main body and the mirror are determined so that a certain point density is ensured in every region of the object surface and also a laser projection time for each point necessary to ensure a certain measurement accuracy. Using the parameters so determined, the non-preliminary scan is performed.

The above procedures are automatically performed. This results in that a time necessary for the mounting of the device to the acquisition of the point cloud data is significantly reduced. Also, the necessary point cloud data can be obtained with an enhanced accuracy.

Although there have been described various embodiments, the invention is not limited thereto and it may be modified in different ways without departing from the gist of the invention.

### INDUSTRIAL APPLICABILITY

The present invention enables obtaining highly accurate point cloud data in a short time by using a mass-producible three-dimensional laser scanning device including the mirror-rotation mechanism, the optical unit, and the body rotation drive mechanism that are achieved without a drastic change from those of a conventional device.

This enables high-precision measurement in a short time without increasing the costs of the device, thereby exhibiting high practicality when used for surveying a road surface or the like.

### DESCRIPTION OF REFERENCE SYMBOLS

- 10: base
- 11: device-rotation mechanism
- 12: mounting table
- 13: spindle
- 14: encoder
- 20: optical unit
- 21: laser source
- 22: mirror
- 23: condense lens
- 24: beam receptive sensor
- 25: control unit
- 30: mirror-rotation mechanism
- 31: motor
- 32: cylinder
- 33: mirror
- 34: encoder
- 41: laser beam
- 42: return beam

## Claims

1. A three-dimensional laser scanning device configured to obtain three-dimensional coordinates of measurement points by projecting laser beam to a surrounding environment and receiving return beam reflected from the surrounding environment, the three-dimensional laser scanning device, comprising:
an optical unit including a laser beam source configured to emit laser beam and a beam receiving device configured to receive return beam of the laser beam reflected from the measurement point;
a mirror driving unit including a mirror that deflects an optical path of the laser beam emitted from the laser beam source and also deflects an optical path of the return beam, and a rotation mechanism configured to rotate the mirror around a first axis;
a body driving unit configured to rotate or rotatably move the optical unit and the mirror driving unit around a second axis orthogonal to the first axis; and
a control unit configured to calculate and store three-dimensional coordinate values of the measurement point based on a distance to the measurement point obtained from by comparing the laser beam emitted from the laser beam source and the return beam reflected from the measurement point and rotation angles about the axis and the second axis, and also configured to control rotation of the mirror driving unit and rotation or rotatable movement of the body driving unit,
wherein the measurement point is on a flat measurement surface, and
wherein a direction of the second axis intersects with a direction orthogonal to the measurement surface at a predetermined angle.

2. The three-dimensional laser scanning device according to claim 1,
wherein the control unit gradually reduces an angular velocity of rotation or rotatable movement about the second axis with an increase of the distance to the measurement point.

3. The three-dimensional laser scanning device according to claim 2,
wherein the control unit gradually reduces an angular velocity of rotation about the first axis in accordance with a change in the angular velocity of the second rotation or rotatable movement as the increase of the distance to the measurement point.

4. The three-dimensional laser scanning device according to any one of claims 1 to 3,
wherein the control unit controls the angular velocity of rotation or rotatable movement about the second axis so as to satisfy a set criterion of a measurement-point density, based on a result of measurement of the measurement surface performed in advance at a density lower than normal.

5. The three-dimensional laser scanning device according to claim 3,
wherein the control unit controls the angular velocity of rotation about the first axis so as to satisfy a set criterion of a measurement-point density, based on a result of measurement of the measurement surface performed in advance at a density lower than normal.

6. The three-dimensional laser scanning device according to claim 1,
wherein the control unit increases a projection time of the laser beam or intensity of the laser beam to each measurement point with the increase of the distance to the measurement point.

7. The three-dimensional laser scanning device according to claim 6,
wherein the control unit gradually reduces an angular velocity of rotation or rotatable movement about the second axis with the increase of the distance to the measurement point.

8. The three-dimensional laser scanning device according to any one of claims 2 to 7,
wherein the control unit performs scanning at a density lower than normal in advance to obtain information on a range about the second shaft.

9. The three-dimensional laser scanning device according to claim 8,
wherein the control unit performs scanning at a density lower than normal in advance to obtain information on a range about the first axis.
